# EUROPÄISCHE PATENTSCHRIFT

(11) **EP 3 873 826 B1**
(45) Veröffentlichungstag und Bekanntmachung des Hinweises auf die Patenterteilung: **13.09.2023**
(21) Anmeldenummer: 19797264.9
(22) Anmeldetag: 30.10.2019
(51) Int. Cl.: B65D 85/804

(54) **KAPSEL MIT ÖFFNUNGSEINHEIT**
CAPSULE WITH OPENING UNIT
CAPSULE AVEC UNE UNITÉ D'OUVERTURE

(30) Priorität: 30.10.2018 DE 102018218592
(43) Veröffentlichungstag der Anmeldung: 08.09.2021
(73) Patentinhaber: säntis packaging ag, 9464 Rüthi (CH); Euro-Caps Holding B.V., 3044 CE Rotterdam (NL)
(72) Erfinder: BUGAJEW, Peter, 9464 Rüthi (CH); KICAJ, Avni, 9464 Rüthi (CH); STIEGER, Paul, 9464 Rüthi (CH); KRONI, Azem, 8464 Rüthi (CH); KAY, Anthony, 3044 CE Rotterdam (NL)
(74) Vertreter: EP&C
(86) Internationale Anmeldenummer: PCT/EP2019/079659
(87) Internationale Veröffentlichungsnummer: WO 2020/089292

(56) Entgegenhaltungen:
- WO-A1-2017/081622
- US-A- 5 656 316
- US-A1- 2005 084 569

## Beschreibung

### Technisches Gebiet

Die Erfindung betrifft eine Öffnungseinheit, die für ein Verpackungsmaterial zur Aufnahme eines Lebensmittelprodukts verwendet werden kann als Teil einer Kapsel, welche Kapsel eine Substanz zur Zubereitung eines Getränks aufnimmt, beispielsweise ein Kaffee- oder Espressopulver. Ferner betrifft die Erfindung ein Verfahren.

### Stand der Technik

Im Bereich der Verpackungstechnik wurden vielzählige Systeme entwickelt, um ein Lebensmittelprodukt aufnehmen zu können. Ein Beispiel einer Lebensmittelverpackung ist eine sogenannte Kaffeekapsel, die in eine entsprechende Kaffeemaschine eingelegt werden kann und eine einfache Zubereitung eines Getränks verspricht.

Auf Grund von Umweltgesichtspunkten und aus Kostengründen hat sich hierbei in den letzten Jahren der Fokus von den ursprünglich aus Aluminium hergestellten Kapseln in Richtung von Kapseln verschoben, die aus einem Kunststoffmaterial gefertigt sind. Derartige Kapseln erfordern jedoch zum Öffnen einen anderen Mechanismus, da verhindert werden soll, dass erwärmte Einstichnadeln einer Kaffeemaschine beim Durchdringen des Kunststoffmaterials der Kapsel zu einer negativen Beeinflussung der Kaffeequalität führen.

Beispielsweise ist aus der DE 41 92 762 T1 ein Verfahren zur Herstellung eines flüssigen Produkts und eine Vorrichtung zur Durchführung desselben bekannt. In der DE 41 92 762 T1 wird eine Kapsel gezeigt, die sich dadurch kennzeichnet, dass zumindest ein Teil des Bodens der Kapsel so ausgebildet ist, dass er, ohne zu reißen, eine Verformung erfahren kann, wobei er sich unter dem Einfluss der Einführung der genannten Flüssigkeiten/oder des Dampfes in das Innere der Kapsel vom Ende der Kapsel, das gegenüber dem Boden derselben angeordnet ist, entfernt.

Ferner ist die WO 2017/0685353 A1 bekannt, die eine Kapsel mit einem Gehäuse, einem Abdeckungselement, einem Verschlusselement und einer Düse aufweist. Allerdings wird zum Öffnen die gesamte Kapsel der WO 2017/0685353 A1 komprimiert. Dabei gleitet die Düse in eine Auslassöffnung der Basiswand so dass ein Außenflansch der Düse das Verschlusselement der Basiswand nach Außen drückt. Somit ist der Aufbau der in der WO 2017/0685353 A1 beschriebenen Kapsel relativ komplex und die Handhabbarkeit der Kapsel nach deren Verwendung ist unter anderem auf Grund der vorstehenden Düse und den verformten Seitenwänden schwierig.

WO-2017/081622 zeigt ein Kapselkörper zur Aufnahme eine Substanz zur Zubereitung eines Getränks ausbildet, beispielsweise ein Kaffee- oder Espressopulver, mit einer Öffnung in seinen Boden, eine Oberfolie, und einer an einer Seite eines Anbringungsabschnitt des Bodens angebrachten Folie welche die Öffnung in den Boden verschließt. Die Folie ist dabei mit einem in sich geschlossenen Anbringungsbereich am Anbringungsabschnitt des Bodens angebracht sowie gegen einem Dämpfungselement. Die Folie selbst muss hier kaputt zerrissen werden.

### Gegenstand der Erfindung

Ein Ziel der Erfindung ist es, eine Kapsel mit Öffnungseinheit bereitzustellen, die eine erhöhte Produktsicherheit gewährleistet und eine gezielte Öffnung der Öffnungseinheit ermittelt.

Der Gegenstand des Anspruchs 1 stellt eine entsprechende Kapsel mit Öffnungseinheit bereit. Weitere bevorzugte Ausführungsformen sind in den abhängigen Ansprüchen aufgeführt.

Die Erfindung hat unter anderem den Vorteil, dass eine Kapsel mit Öffnungseinheit einen integrierten Öffnungsmechanismus bereitstellt. Wird die Kapsel mit Öffnungseinheit beispielsweise für eine Kaffee- oder Espressokapsel verwendet, so wird hiermit ermöglicht, dass keine Interaktion mit einer Einstichnadel der Kaffee- oder Espressomaschine erforderlich ist. Weitere Vorteile der Erfindung werden nachfolgend beschrieben.

Erfindungsgemäß wird eine Kapsel mit Öffnungseinheit bereitgestellt, die mindestens ein Grundelement mit mindestens einer Öffnung und einer an einer Seite des Grundelements angebrachten Folie aufweist, wobei die Folie die Öffnung verschließt. Die Folie ist mit einem in sich geschlossenen Anbringungsbereich am Grundelement angebracht, und das Grundelement ist derart verformbar, dass bei Verformung des Grundelements eine Schicht der Folie abgelöst wird oder sich der Anbringungsbereich öffnet. Bevorzugt ist der Anbringungsbereich eine Siegelung/Siegelungsnaht, mittels der die Folie mit dem Grundelement verbunden ist.

Die mit dem in sich geschlossenen Anbringungsbereich am Grundelement angebrachte Folie kann eine luftdichte Abdichtung bereitstellen. Beispielsweise verläuft der in sich geschlossene Anbringungsbereich um zumindest eine Öffnung im Grundelement.

Das Grundelement kann einen in sich geschlossenen Anbringungsabschnitt aufweisen, an dem die Folie mit dem genannten in sich geschlossenen Anbringungsbereich angebracht ist. Beispielsweise kann der in sich geschlossenen Anbringungsabschnitt ringförmig sein.

Ein Öffnen des Anbringungsbereichs kann dabei durch eine Schwachstelle im Anbringungsbereich bedingt werden. Eine solche Schwachstelle kann gezielt im Anbringungsbereich vorgesehen sein, oder es handelt sich um eine toleranzbedingte Schwachstelle.

Ein Öffnen des Anbringungsbereichs kann beispielsweise ein teilweises Aufbrechen und/oder Abtrennen/Ablösen einer Siegelung, mittels der die Folie mit dem Grundelement verbunden ist, bedeuten.

Alternativ oder zusätzlich kann die Folie bei einer Verformung des Grundelements ein Peelverhalten aufweisen. Das Peelverhalten wird nachfolgend auch als Delamination bezeichnet. Durch das Peelverhalten ist ein Ablösen eines Teils der Folie gemeint. Dabei kann beispielsweise eine Schicht der Folie von einer weiteren Schicht oder einem weiteren Schichtverbund der Folie abgelöst werden. Dies kann auch bereichsweise erfolgen.

Es ist bevorzugt, dass der Anbringungsbereich mindestens eine Schwachstelle aufweist.

In einer weiteren Ausführungsform ist es vorgesehen, dass das Grundelement in unbelastetem Zustand einen Wölbungsabschnitt im Bereich der mindestens einen Öffnung aufweist, wobei bevorzugt ist, dass die Folie den Wölbungsabschnitt zumindest teilweise überspannt. Bei dieser Ausführungsform kann die Verformung des Grundelements zu einer Veränderung der Gestalt des Wölbungsabschnitts führen. Beispielsweise wird ein nach innen gewölbter Abschnitt im Zuge der Verformung nach außen gewölbt. Dies wiederum führt dazu, dass eine Schicht der Folie abgelöst wird, und/oder sich der Anbringungsbereich öffnet.

Gemäß einer Ausführungsform umfasst das Grundelement:
- einen Boden;
- einen den Boden umgebenden Anbringungsabschnitt; und
- einen die Seitenwand des Grundelements ausbildenden Umfangsabschnitt,

wobei die Folie mit dem in sich geschlossenen Anbringungsbereich am Anbringungsabschnitt angebracht ist,
wobei zumindest ein Teil des Bodens so ausgebildet ist, dass er eine Verformung erfahren kann durch welche Verformung die Schicht der Folie abgelöst wird oder sich der Anbringungsbereich öffnet.

In einer weiteren Ausführungsform ist bevorzugt, dass der Boden in unbelastetem Zustand einen Wölbungsabschnitt umfasst, wobei die Folie den Wölbungsabschnitt zumindest teilweise überspannt.

In einer Ausführungsform ist vorgesehen, dass der Wölbungsabschnitt in unbelastetem Zustand nach innen gewölbt ist, und die Verformung erfahren kann wodurch der Wölbungsabschnitt nach außen gewölbt gerichtet werden, durch welche Verformung die Schicht der Folie abgelöst wird oder sich der Anbringungsbereich öffnet.

In einer weiteren Ausführungsform weist das Grundelement in unbelastetem Zustand einen Wölbungsabschnitt auf. Dabei ist es bevorzugt, dass die zumindest eine Öffnung in einem Anbringungsabschnitt zwischen dem Wölbungsabschnitt und einer Seitenwand des Grundelements vorgesehen ist.

Auch bei dieser Ausführungsform kann die Verformung des Grundelements zu einer Veränderung der Gestalt des Wölbungsabschnitts führen. Beispielsweise wird ein nach innengewölbter Abschnitt im Zuge der Verformung nach außen gewölbt. Dies wiederum führt dazu, dass eine Schicht der Folie abgelöst wird und/oder sich der Anbringungsbereich öffnet.

Wird ein bestimmter Druck in der Kapsel erreicht (und/oder ein bestimmtes Volumen einer in die Kapsel eingeführten Flüssigkeit erreicht wird), verformt sich das Grundelement gezielt, insbesondere schlagartig, insbesondere indem sich ein nach innen gewölbter Abschnitt im Zuge der Verformung nach außen gewölbt wird. Die Verformung des Grundelements und damit die schlagartige Kraft führt dazu, dass sich eine Schicht der Folie ablöst und/oder sich der Anbringungsbereich mindestens teilweise öffnet. Zusätzlich kann der Druckanstieg (gegebenenfalls in Kombination mit einem Anstieg der Temperatur) ebenso die Siegelung zwischen der Folie und dem Anbringungsabschnitt des Grundelements über die Öffnung (oder die mehreren Öffnungen) erreichen. Dies kann ebenso dazu beitragen, dass eine Schicht der Folie abgelöst wird, und/oder sich der Anbringungsbereich öffnet, insbesondere wenn die Öffnung (oder die mehreren Öffnungen) im Anbringungsabschnitt des Grundelements vorgesehen sind.

Es ist bevorzugt, dass das Grundelement einen oder mehrere Stanzbereiche aufweist, mittels derer die Öffnung im Grundelement ausgebildet ist. Eine derartige Öffnung lässt sich relativ einfach und kostengünstig im Zuge der Fertigung erstellen.

In einer weiteren Ausführungsform ist es vorgesehen, dass die Stanzbereiche sich schneidende Stanzlinien sind. Dabei kann es ferner vorgesehen sein, dass durch die Stanzlinien eine in der Draufsicht dreiecksförmige (oder pfeilförmige) Öffnung ausgebildet ist.

Dabei können zwei Seiten der dreiecksförmigen Öffnung durch die Stanzlinien gebildet werden. An einer dritten Seite der dreiecksförmigen Öffnung ist eine zwischen den Stanzlinien vorgesehene Lasche, die ein Abschnitt des Grundelements ist, gehalten.

Da in einer Ausführungsform durch einen oder mehrere Stanzbereiche eine Lasche ausgebildet wird, kann die Lasche, nachdem der Druck im Grundelement nachlässt, auf Grund der elastischen Kräfte des Materials des Grundelements und/oder eines Unterdrucks wieder in ihre Ausgangsstellung zurückbewegt werden. Somit wird ein Nachtropfen in geeigneter Weise verhindert oder zumindest deutlich reduziert.

Es ist bevorzugt, dass eine Spitze der dreiecksförmigen Öffnung, die durch die sich schneidenden Stanzlinien oder eine gebogene Standlinie gebildet wird, in radialer Richtung nach Außen weist. Somit strömt die Flüssigkeit über die in einem radial inneren Bereich gehaltene Lasche mit einer teilweise in radialer Richtung ausgerichteten Strömungskomponente aus dem Grundelement.

Das Grundelement kann in einem Bodenbereich, in dem beispielsweise der Wölbungsabschnitt angeordnet ist, eine geringere Wandstärke aufweisen als beispielsweise im Bereich einer Seitenwand des Grundelements. Auf diese Weise wird ein Umklappen des Wölbungsabschnitts begünstigt.

Wird das Grundelemente beispielsweise mittels Thermoformen hergestellt, kann ein dünneres Ausgangsmaterial verwendet werden, wodurch zusätzlich eine Materialeinsparung erreicht wird. Rein beispielhaft kann das Ausgangsmaterial eine Dicke (Wandstärke) von 0.8mm aufweisen, so dass nach dem Thermoformen der Bodenbereich des Grundelements eine Dicke von 0.4mm hat. Es ist bevorzugt, dass der Anbringungsbereich eine Breite von ungefähr 1mm aufweist.

Ferner kann es vorgesehen sein, dass die mindestens eine Öffnung eine Filterstruktur aus Mikroöffnungen mit einer maximalen Abmessung von 100µm, bevorzugt zwischen 5-400µm, weiter bevorzugt weniger als 5-200µm, weiter bevorzugt 10-100 µm aufweist. Auf diese Weise wird gewissermaßen ein Filter in das Grundelement integriert, sodass Partikel mit bestimmter Größe zurückgehalten werden können.

Gemäß einer weiteren Ausführungsform ist es vorgesehen, dass im Bereich der zumindest einen Öffnung ein Filter vorgesehen ist. Insbesondere kann der Filter an einer Innenseite des Grundelements angebracht sein. Der Filter verhindert, dass Partikel mit einer bestimmten Größe zur Öffnung gelangen.

Es ist bevorzugt, dass die Folie aus einem mehrschichtigen Material, insbesondere Kunststoffmaterial, ausgebildet ist. Diese Ausgestaltung hat sich insbesondere in Kombination mit der bereits genannten Folie mit Peelverhalten als vorteilhaft erwiesen.

Ferner kann es vorgesehen sein, dass der Anbringungsbereich durch eine Siegelung ausgebildet wird. Derartiges gewährleistet eine sichere Verbindung zwischen Folie und Grundelement.

Ferner ist es bevorzugt, dass die Öffnungseinheit, insbesondere das Grundelement der Öffnungseinheit, aus einem Kunststoffmaterial ausgebildet ist, wobei das Grundelement beispielsweise mittels Tiefziehens gefertigt wird oder als Spritzgussteil ausgebildet ist.

In einer weiteren Ausführungsform der Erfindung sind Seitenwände und mindestens ein Teil des Bodens der Öffnungseinheit einteilig ausgeführt. Somit kann die Fertigung vereinfacht werden.

Ferner kann es vorgesehen sein, dass an einer weiteren Seite des Grundelements eine weitere Folie angebracht ist, um die Öffnung zu verschließen. Somit kann ein zusätzlicher Schutzbereich gestellt werden. Ferner kann die weitere Folie im geöffneten Zustand auch eine gewisse Filterfunktion übernehmen.

Die Erfindung ist auf eine Kapsel gerichtet, wobei es sich insbesondere um eine Kaffee- oder Espressokapsel handeln kann. Die Kapsel umfasst eine Öffnungseinheit gemäß einem der zuvor genannten Aspekte sowie eine Oberfolie, die die Öffnungseinheit verschließt. Bei Verwendung der Öffnungseinheit für die Kapsel, insbesondere Kaffee- oder Espressokapsel, kommen die zuvor genannten Vorteile besonders zu tragen.

In einer weiteren Ausführungsform der Kapsel ist es vorgesehen, dass zumindest ein Teil des Bodens der Öffnungseinheit so ausgebildet ist, dass er eine Verformung erfahren kann, wobei sich der Boden unter dem Einfluss der Einführung einer Flüssigkeit und/oder eines Dampfes in die Kapsel verformt. Insbesondere kann die Kapsel in eine Kaffeemaschine eingelegt werden, und die zuvor genannte Oberfolie wird durch einen Mechanismus der Kaffee/Espressomaschine durchstoßen. Die in die Kapsel eingeführten Dorne der Kaffee/Espressomaschine sind ferner dazu eingerichtet, eine Flüssigkeit in die Kapsel einzuführen. Wird ein bestimmter Druck in der Kapsel erreicht, verformt sich das Grundelement gezielt, insbesondere schlagartig. Die Verformung des Grundelements führt dazu, dass die aufgesiegelte Folie von der Kapsel weg gedrückt wird, so dass sich eine Schicht der Folie ablöst und/oder sich der Anbringungsbereich mindestens teilweise öffnet.

In einer weiteren Ausführungsform umfasst die Kapsel ein Entnahmeteil, welches Entnahmeteil mindestens einen Aufnahmeraum aufweist, der mit zumindest einem Auslassbereich für den Durchtritt einer Flüssigkeit in Verbindung steht. Somit kann die Flüssigkeit gezielt durch den Entnahmeteil geführt werden. Beispielsweise ist der Auslassbereich mittig angeordnet, so dass die Flüssigkeit in einem Strom aus dem Entnahmeteil austritt. Wird ein bestimmter Druck in der Kapsel erreicht, verformt sich das Grundelement gezielt, insbesondere schlagartig. Die Verformung des Grundelements führt dazu, dass die aufgesiegelte Folie von der Kapsel weg gedrückt wird, so dass sich eine Schicht der Folie ablöst und/oder sich der Anbringungsbereich mindestens teilweise öffnet.

Der Entnahmeteil kann ein Mittel zur Auflage eines Abschnitts der Öffnungseinheit aufweisen, wenn der Abschnitt der Öffnungseinheit einen bestimmten Verformungsgrad gegenüber seiner ursprünglichen Form erreicht hat. Beispielsweise ist das Mittel zur Auflage eines Abschnitts der Öffnungseinheit als rippenartige Struktur im Aufnahmeraum ausgebildet. Somit wird der entsprechende Abschnitt der Öffnungseinheit in einer definierten Position platziert.

Es ist bevorzugt, dass der Entnahmeteil einen Umfangsraum aufweist, wobei der Umfangsraum durch eine Trennwand vom Aufnahmeraum getrennt ist, wobei Durchflussöffnungen in der Trennwand vorgesehen sind. Somit kann eine in den Umfangsraum eintretende Flüssigkeit mittels der Durchflussöffnungen in den Aufnahmeraum weitergeleitet werden, wenn die Flüssigkeit im Umfangsraum ein bestimmtes Niveau erreicht hat. Ferner können die Durchflussöffnungen eine Filterwirkung übernehmen.

Ferner ist die Erfindung auf ein Verfahren zur Verwendung einer Kapsel gerichtet. Insbesondere kann im Zuge des Verfahrens eine Kapsel gemäß einem oder mehreren der zuvor genannten Aspekte verwendet werden.

Die Öffnungseinheit weist mindestens ein Grundelement mit mindestens einer Öffnung und einer an einer Seite des Grundelementes angebrachten Folie auf, welche die Öffnung verschließt, wobei die Folie mit einem in sich geschlossenen Anbringungsbereich am Grundelement angebracht ist. Das Verfahren umfasst die Schritte: Einführen einer Flüssigkeit durch die Oberfolie in die Öffnungseinheit, wobei das Grundelement bei einem bestimmten Druck verformt wird, und wobei bei Verformung des Grundelements eine Schicht der Folie abgelöst wird oder sich der Anbringungsbereich öffnet.

In einer weiteren Zielrichtung wird die Verwendung einer Öffnungseinheit gemäß einem der zuvor genannten Aspekte oder eine Kapsel gemäß einem der zuvor genannten Aspekte zur Zubereitung eines Getränks, insbesondere eines Kaffees, Espressos oder Tees, bereitgestellt.

Ferner betrifft die Erfindung ein Verfahren zur Verwendung einer Kapsel, insbesondere einer Kapsel nach einem der obigen Aspekte, wobei die Kapsel eine Öffnungseinheit sowie eine Oberfolie aufweist. Die Öffnungseinheit weist mindestens ein Grundelement mit mindestens einer Öffnung und einer an einer Seite des Grundelementes angebrachten Folie auf, welche die Öffnung verschließt, wobei die Folie mit einem in sich geschlossenen Anbringungsbereich am Grundelement angebracht ist. Das Verfahren umfasst die Schritte: Einführen einer Flüssigkeit durch die Oberfolie in die Öffnungseinheit, wobei das Grundelement bei einem bestimmten Druck verformt wird, und bei Verformung des Grundelements eine Schicht der Folie abgelöst wird und/oder sich der Anbringungsbereich öffnet.

Ferner wird eine Kapsel bereitgestellt, die ein Grundelement sowie einen Entnahmeteil aufweist, wobei der Entnahmeteil an einem Bodenbereich des Grundelements vorgesehen ist. Die Kapsel kann einen oder mehrere der zuvor genannten Aspekte aufweisen. Das Grundelement umfasst im Bodenbereich einen verformbaren Abschnitt, insbesondere einen Wölbungsabschnitt. Beispielsweise wird ein nach innen gewölbter Abschnitt im Zuge der Verformung nach außen gewölbt, um die Kapsel zu öffnen. Ferner ist im Bodenbereich des Grundelements zumindest ein Stanzbereich (oder mehrere Stanzbereiche) vorgesehen. Durch den zumindest einen Stanzbereich kann ein Abschnitt des Grundelements bereitgestellt werden, der bei Benutzung der Kapsel an einer Öffnung des Grundelements als Lasche mit dem Grundelement verbunden bleibt.

Nachdem der Druck im Grundelement nachlässt, kann auf Grund der elastischen Kräfte des Materials des Grundelements und/oder eines Unterdrucks die Lasche wieder in ihre Ausgangsstellung zurückbewegt werden. Somit wird ein Nachtropfen in geeigneter Weise verhindert oder zumindest deutlich reduziert.

### Kurze Beschreibung der Zeichnungen

- Fig. 1: zeigt einer Querschnittsansicht einer ersten Ausführungsform der Erfindung.
- Fig. 2: ist eine Explosionsansicht der in Fig. 1 dargestellten ersten Ausführungsform.

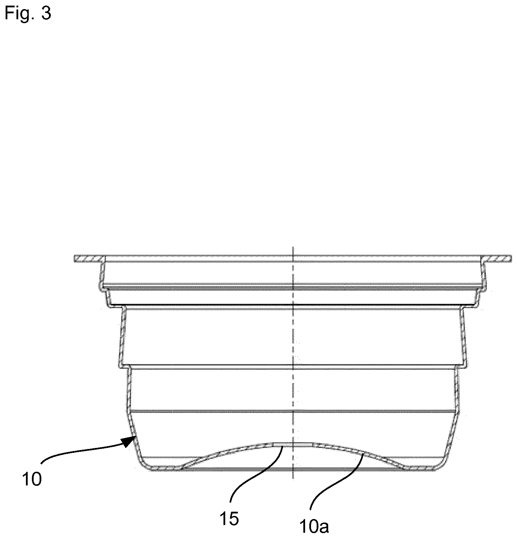

- Fig. 3: zeigt ein Grundelement der in Fig. 1 dargestellten ersten Ausführungsform.

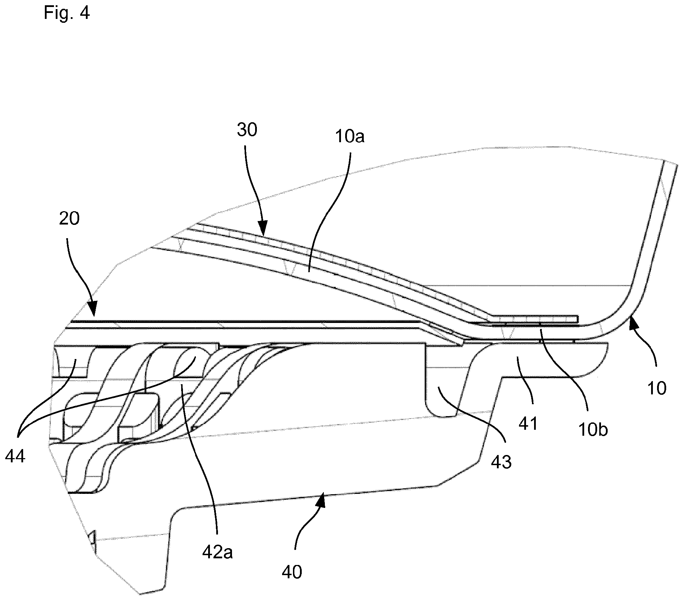

- Fig. 4: ist eine Detailansicht aus Fig. 1.
- Fig. 5a-5c: veranschaulichen einen Öffnungsvorgang der ersten Ausführungsform.
- Fig. 6: zeigt eine Querschnittsansicht einer zweiten Ausführungsform der Erfindung.
- Fig. 7: ist eine Detailansicht von Fig. 6.

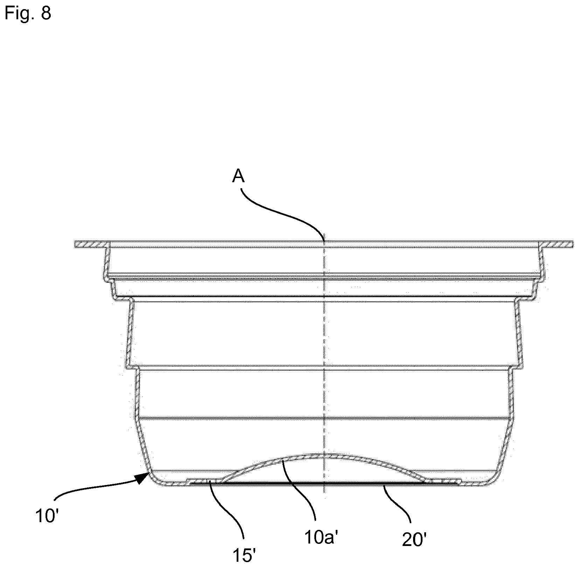

- Fig. 8: zeigt ein Grundelement der zweiten Ausführungsform gemäß Fig. 6.
- Fig. 9: zeigt ein Grundelement einer dritten Ausführungsform der Erfindung.
- Fig. 10: zeigt ein Grundelement einer vierten Ausführungsform der Erfindung.
- Fig. 11: veranschaulicht eine erste Modifikation der Erfindung, die beispielsweise in einer der zuvor genannten Ausführungsformen zum Einsatz kommen kann.
- Fig. 12: veranschaulicht eine zweite Modifikation der Erfindung, die beispielsweise in einer der zuvor genannten Ausführungsformen zum Einsatz kommen kann.
- Fig. 13a-c: zeigt einen Öffnungsvorgang einer dritten Modifikation der Erfindung, die beispielsweise in einer der zuvor genannten Ausführungsformen zum Einsatz kommen kann.
- Fig. 14a-c: veranschaulicht einen Öffnungsvorgang einer vierten Modifikation der Erfindung, die beispielsweise in einer der zuvor genannten Ausführungsformen zum Einsatz kommen kann.
- Fig. 15a: zeigt eine fünfte Modifikation der Erfindung, die beispielsweise in einer der zuvor genannten Ausführungsformen zum Einsatz kommen kann.
- Fig. 15b: veranschaulicht eine sechste Modifikation der Erfindung, die beispielsweise in einer der zuvor genannten Ausführungsformen zum Einsatz kommen kann.
- Fig. 16: zeigt eine fünfte Ausführungsform der Erfindung.
- Fig. 17: zeigt die in Figur 16 dargestellte fünfte Ausführungsform in einer Explosionsansicht.
- Fig. 18: ist eine Ansicht der in Figur 16 dargestellten fünften Ausführungsform während oder nach dem Einführen einer Flüssigkeit.
- Fig. 19: ist eine Detailansicht aus Figur 18.
- Fig. 20a: ist eine perspektivische Teilschnittansicht der in Figur 16 dargestellten Ausführungsform in einem Ausgangszustand.
- Fig. 20b: ist eine perspektivische Teilschnittansicht nach dem Einführen einer Flüssigkeit.

### Detaillierte Beschreibung der bevorzugten Ausführungsformen

Nachfolgend werden basierend auf den beigefügten Zeichnungen Ausführungsformen und Modifikationen der Erfindung beschrieben, um die Erfindung anhand anschaulicher Beispiele näher zu erläutern. Obwohl die nachfolgend beschriebenen Ausführungsformen und Modifikationen nicht einschränkend, sondern rein beispielhaft zu betrachten sind, können Einzelmerkmale der beschriebenen Ausführungsformen und Modifikationen auch zur Spezifizierung der Erfindung herangezogen werden. Ferner können Ausführungsformen und Modifikationen miteinander kombiniert werden, um weitere erfindungsgemäße Beispiele bereitzustellen.

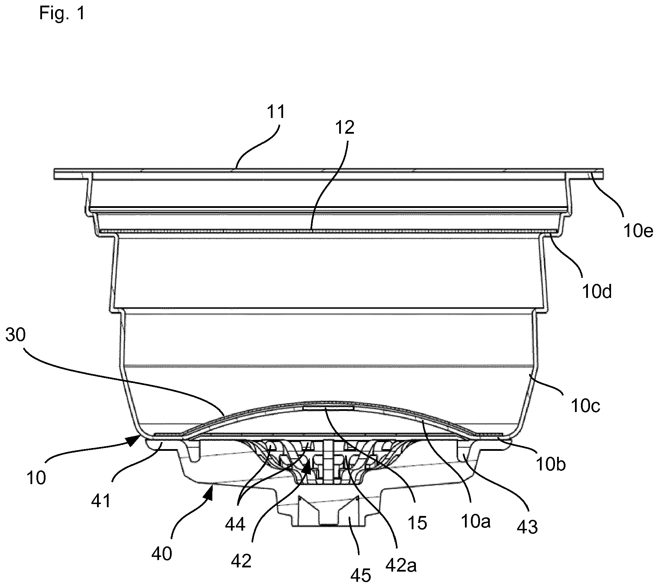

Fig. 1 zeigt eine Querschnittsansicht einer Kapsel, die zur Aufnahme eines Kaffee- oder Espressopulvers vorgesehen ist. Die dargestellte Kapsel umfasst eine Öffnungseinheit, die durch eine Oberfolie oder Deckel verschlossen ist und somit die Kapsel ausgebildet. Nachfolgend wird auf die Kapsel Bezug genommen.

Die Kapsel umfasst ein Grundelement 10, welches einen Kapselkörper zur Aufnahme eines Kaffee- oder Espressopulvers ausbildet. Das Grundelement 10 kann beispielsweise aus einem Kunststoffmaterial ausgebildet sein, insbesondere mittels Tiefziehens oder gemäß einer weiteren Variante mittels Spritzgießens.

Das Grundelement 10 umfasst einen Wölbungsabschnitt 10a (auch einfach als "Wölbung" bezeichnet), einen den Wölbungsabschnitt 10a umgebenden Anbringungsabschnitt 10b sowie einen die Seitenwand des Grundelements 10 ausbildenden Umfangsabschnitt 10c. Im Wölbungsabschnitt 10a ist, mittig zum Umfangsabschnitt 10c, eine Öffnung 15 ausgebildet. Bei der Herstellung des Grundelements 10 kann diese Öffnung 15 beispielsweise aus einem Ausgangsmaterial ausgestanzt werden.

Der Durchmesser der Öffnung 15 ist derart dimensioniert, dass bei einem entsprechenden Druckniveau innerhalb des Grundelements 10 eine bevorzugte Durchflussrate erreicht werden kann. Somit kann der Durchmesser der Öffnung 15 entsprechend der in der Kapsel aufgenommenen Substanz dimensioniert sein.

Im Bereich des Umfangsabschnitts 10c ist ein Absatz 10d ausgebildet, der im Inneren des Grundelements 10 eine Stufe bereitstellt. Am Absatz 10d des Grundelements 10 ist eine Innenfolie 12 eingebracht, die dazu dient, die im Grundelement 10 aufgenommene Substanz zu halten und eine in das Grundelement eingebrachte Flüssigkeit durch in der Innenfolie 12 vorgesehene Öffnungen über die Substanz zu verteilen.

An einem zum Wölbungsabschnitt 10a entgegengesetzten Ende des Grundelements 10 ist ein Flansch 10e vorgesehen, der sich ausgehend vom Umfangsabschnitt 10c nach außen erstreckt. Der Flansch 10e dient der Aufnahme eines Deckels 11 (Oberfolie), der einen (in Figur 1 oberen) Abschnitt des Grundelements 10 verschließt.

Innerhalb des Grundelements 10 ist ein Filter 30 eingelegt, der sich über den Wölbungsabschnitt 10 und in den Bereich des Anbringungsabschnitts 10b erstreckt. Es ist bevorzugt, dass der Filter 30 mit einer Innenseite des Grundelements fest verbunden ist. Das Verbinden des Filters 30 mit dem Grundelement 10 kann nach dem Ausbilden des Grundelements 10 und vor dessen Beschickung mit der Substanz (z.B. Espressopulver) erfolgen.

An der Außenseite des Grundelements 10 ist im Bereich des Anbringungsabschnitts 10b ein Entnahmeteil 40 (auch als "Bodenteil" bezeichnet) angebracht. Die Anbringung des Entnahmeteils 40 erfolgt mittels einer Schweißnaht im Bereich des Anbringungsabschnitts 10b.

Der Entnahmeteil 40 weist einen Verbindungsabschnitt 41 auf, der flanschartig ausgebildet ist und einen Verbindungsbereich zur Anbringung des Entnahmeteils 40 am Grundelement 10 bereitstellt. Der Entnahmeteil 40 weist einen Aufnahmeraum 42 sowie einen Umfangsraum 43 auf. Der Aufnahmeraum 42 liegt dem Wölbungsabschnitt 10a des Grundelements 10 gegenüber, insbesondere der Öffnung 15 des Grundelements 10.

Der Umfangsraum 43 ist durch eine Überstrombarriere in Form einer Trennwand 42a vom Aufnahmeraum 42 getrennt, wobei Durchflussöffnungen 44 vorgesehen sind, die den Umfangsraum 43 und den Aufnahmeraum 42 miteinander verbinden.

Die Durchflussöffnungen 44 können eine Geometrie aufweisen, welche die Funktion eines Expansionsventils hat.

An einer bei Verwendung der Kapsel in vertikaler Richtung nach unten weisenden Seite des Entnahmeteils 40 ist ein Auslassbereich 45 vorgesehen, durch den die bei Verwendung in die Kapsel eingefüllte Flüssigkeit zum Äußeren gelangt. Der Auslassbereich 45 ist, im Querschnitt betrachtet, mittig (bzw. um eine Achse der Kapsel) angeordnet.

Zwischen dem Entnahmeteil 40 und dem Grundelement 10 ist eine Folie 20 vorgesehen, die am Wölbungsabschnitt 10a angebracht ist und den Wölbungsabschnitt 10a überspannt. Die Folie 20 erstreckt sich dabei, in der Querschnittsansicht betrachtet, im Wesentlichen in einer Ebene mit dem Anbringungsabschnitt 10b.

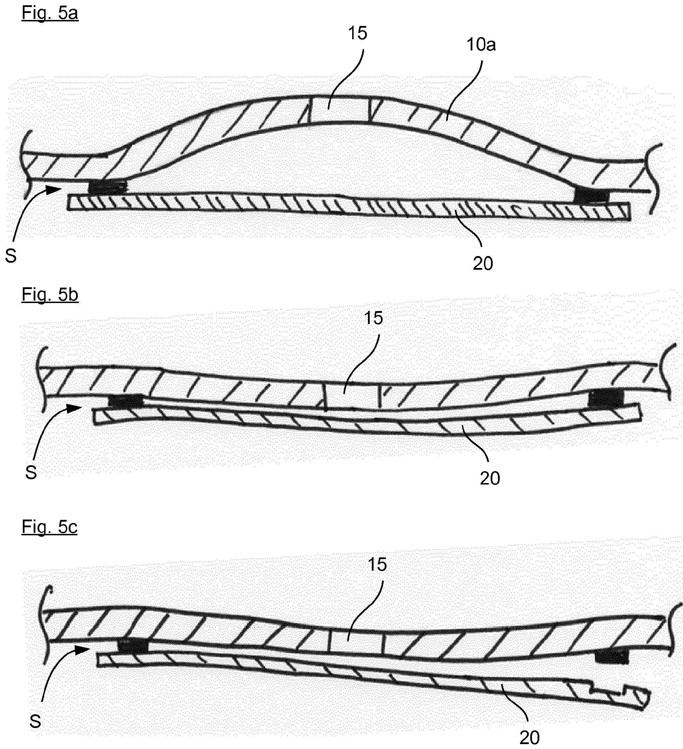

Anhand der schematischen Figuren 5a-5c wird ein Öffnungsvorgang der Kapsel veranschaulicht. Insbesondere wird bei Verwendung der Kapsel in einer Kaffee- oder Espressomaschine von der Seite des Deckels 11 eine Flüssigkeit in das Grundelement 10 eingebracht und der Druck innerhalb des Grundelements 10 auf diese Weise erhöht. Der erhöhte Druck führt dazu, dass sich der Wölbungsabschnitt 10a des Grundelements 10 von der in Fig. 1 dargestellten Ausrichtung nach außen verformt. Die Verformung des Wölbungsabschnitts 10a erfolgt dabei schlagartig, so dass der beschriebene Vorgang durch ein "Blopp-Geräusch" wahrgenommen wird. Anhand des Geräuschs kann nachvollzogen werden, dass ein bestimmtes Druckniveau innerhalb des Grundelements 10 erreicht wurde.

Die Verformung des Wölbungsabschnitts 10a des Grundelements 10 führt dazu, dass der Abstand zwischen dem Anbringungsbereich S (Siegelungsnaht) der Folie 20 und dem Grundelement 10 vergrößert wird. Sobald der sich vergrößernde Abstand einen bestimmten Schwellwert übersteigt, wird ein Teil der Folie 20 auf Grund des Peelverhaltens abgelöst/delaminiert (siehe Fig. 5c), sodass die Folie 20 nur noch teilweise am Grundelement 10 gehalten wird.

Durch die Delamination beziehungsweise das Ablösen der Folie 20 wird ein Durchgang durch den von der Folie 20 geschlossenen Bereich um die Öffnung 15 ermöglicht. Der nicht mehr mit dem Grundelement 10 verbundene Teil der Folie 20 legt sich an das Entnahmeteil 40 an. Hierzu ist im Aufnahmeraum 42 eine rippenartige Struktur vorgesehen.

Die sich im Grundelement 10 befindliche Flüssigkeit kann demnach in Richtung des Entnahmeteils 40, insbesondere in den Umfangsraum 43 des Entnahmeteils 40, austreten. Da zwischen dem Umfangsraum 43 und dem Aufnahmeraum 42 die Trennwand 42a vorgesehen ist, füllt die Flüssigkeit zunächst den Umfangsraum. Wenn die Flüssigkeit das Niveau der Durchflussöffnungen 44 erreicht, strömt die Flüssigkeit in den Aufnahmeraum 42.

Der Aufnahmeraum 42 befindet sich fluidmäßig in Verbindung mit dem Auslassbereich 45, sodass die Flüssigkeit durch den Aufnahmeraum 42 und den Auslassbereich 45 zum Äußeren der Kapsel austritt.

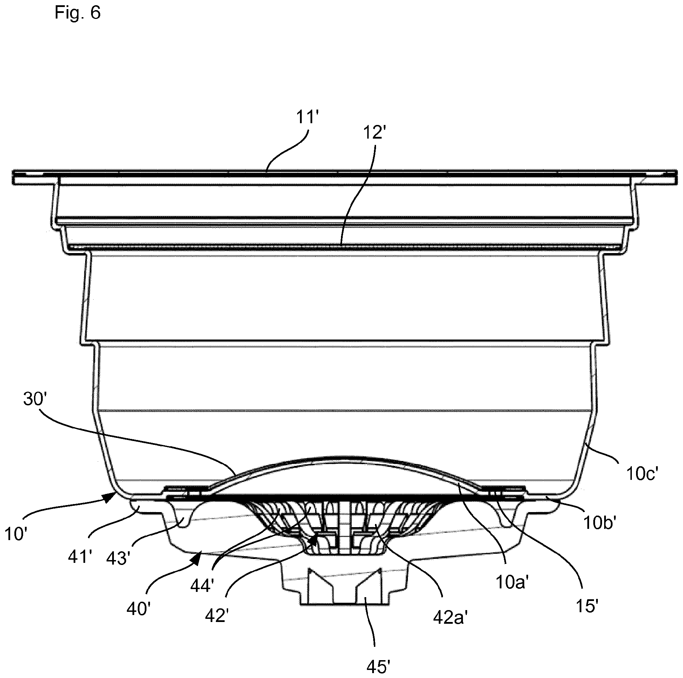

In Fig. 6 wird eine zweite Ausführungsform der Erfindung dargestellt. Komponenten der zweiten Ausführungsform, die denjenigen der ersten Ausführungsform entsprechen oder diesen ähnlich sind, werden mit entsprechenden Bezugszeichen versehen. Ergänzend zu den nachfolgenden Erläuterungen wird auch auf die obige Beschreibung verwiesen, um Wiederholungen zu vermeiden.

Die zweite Ausführungsform weist ein Grundelement 10' auf, das mit einem Deckel 11' (Oberfolie) an einer Seite verschlossen ist. Das Grundelement 10' umfasst wie bei der ersten Ausführungsform einen Wölbungsabschnitt 10a', einen Anbringungsabschnitt 10b`, einen Umfangsabschnitt 10c` sowie einen Flansch 10e'. Im Bereich des Umfangsabschnitts 10c' ist ein Absatz 10d` vorgesehen, um im Inneren des Grundelements 10' eine Innenfolie 12' aufzunehmen. Ferner ist an der Innenseite des Wölbungsabschnitts 10a' ein Filter 30' angebracht.

Ähnlich wie in der ersten Ausführungsform ist am Anbringungsabschnitt 10b' ein Entnahmeteil 40' angebracht, der ähnlich wie der Entnahmeteil 40 der ersten Ausführungsform ausgebildet ist, und insbesondere einen Verbindungsabschnitt 41', einen Aufnahmeraum 42', einer Trennwand 42a', einen Umfangsraum 43', Durchflussöffnungen 44' zwischen dem Umfangsraum 43' und dem Aufnahmeraum 42', sowie einen Auslassbereich 45' umfasst.

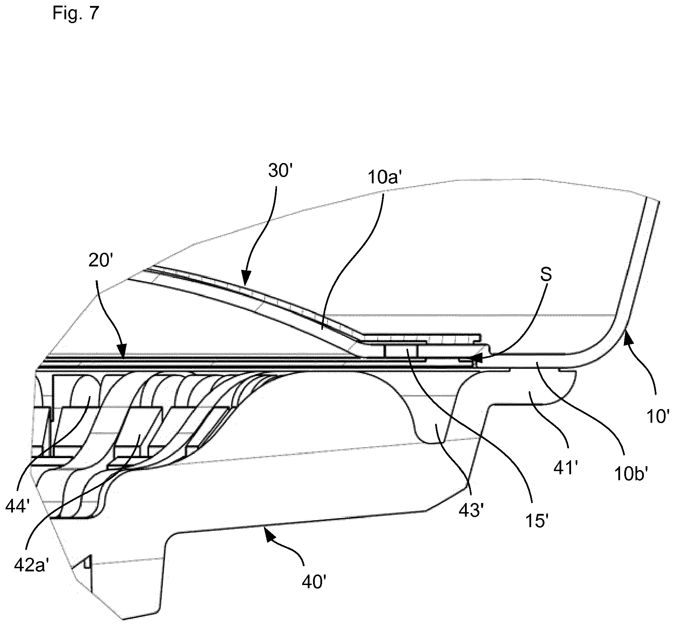

Die zweite Ausführungsform unterscheidet sich darin von der ersten Ausführungsform, dass anstelle der Öffnung 15 der ersten Ausführungsform, die mittig am Wölbungsabschnitt 10a der ersten Ausführungsform vorgesehen ist, eine Vielzahl von Öffnungen 15' im Bereich des Anbringungsbereichs 10b' des Grundelements 10' vorgesehen sind. Die Anordnung einer der Öffnungen 15' der zweiten Ausführungsform ist anschaulich in der Detailansicht von Fig. 7 dargestellt.

Ferner unterscheidet sich die zweite Ausführungsform von der ersten Ausführungsform darin, dass die Folie 20' im Bereich des Anbringungsabschnitts 10b` angebracht ist, und durch die Folie 20' somit die Vielzahl der Öffnungen 15' abgedeckt werden.

Der Öffnungsvorgang zum Öffnen der zweiten Ausführungsform erfolgt wie in der ersten Ausführungsform durch eine Verformung des Wölbungsabschnitt 10a', die durch ein bestimmtes Druckniveau innerhalb des Grundelements 10' bedingt wird. Da die Öffnungen 15' im Bereich des Anbringungsabschnitts 10b' vorgesehen sind und durch einen Anbringungsbereich S der Folie 2' abgedeckt werden, tritt die in das Grundelement 10' eingeführte Flüssigkeit erst nach einem Ablösen eines Teils der Folie 20' auf Grund des Peelverhaltens der Folie 20' aus dem Grundelement 10' aus.

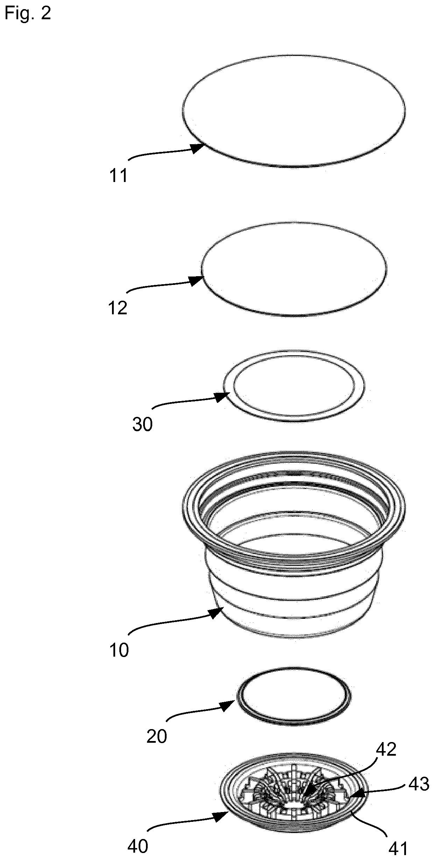

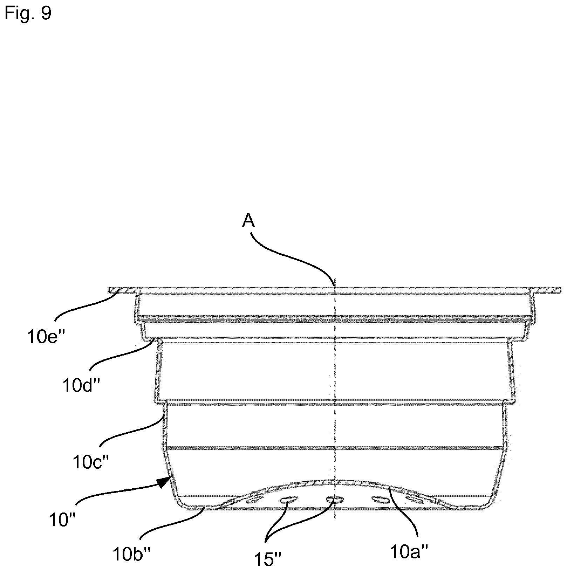

In Fig. 9 ist ein Grundelement 10" gemäß einer dritten Ausführungsform dargestellt. Das Grundelement 10" kann, wie in der Explosionsansicht von Fig. 2 dargestellt, mit einem Deckel (Oberfolie), einer Innenfolie, einem Filter an einer Innenseite des Grundelements 10", einer Folie an einer Außenseite des Grundelements sowie einem Entnahmeteil versehen werden. Bezüglich dieser Elemente wird auf die Beschreibung der ersten und zweiten Ausführungsform verwiesen.

Das Grundelement 10" gemäß der dritten Ausführungsform ist im Wesentlichen wie derjenige der ersten Ausführungsform ausgebildet und umfasst einen Wölbungsabschnitt 10a", einen Anbringungsabschnitt 10b", einen Umfangsabschnitt 10c" sowie einen Flansch 10e". Im Bereich des Umfangsabschnitts 10c" ist ein Absatz 10d" vorgesehen, um im Inneren des Grundelements 10" eine Innenfolie (nicht dargestellt) aufzunehmen.

Das Grundelement 10" unterscheidet sich jedoch darin vom Grundelement 10 der ersten Ausführungsform, dass anstelle einer Öffnung 15 mehrere Öffnungen 15" im Wölbungsabschnitt 10a" ausgebildet sind. Die Öffnungen 15" sind relativ zu einer Achse A kreisförmig am Wölbungsabschnitt 10a" angeordnet.

Der Durchmesser der Öffnungen 15" ist dabei kleiner als der Durchmesser der Öffnung 15 der ersten Ausführungsform. Die Öffnungen 15" übernehmen somit eine Filterfunktion, so dass der in der ersten Ausführungsform beschriebene Filter auch weggelassen werden kann.

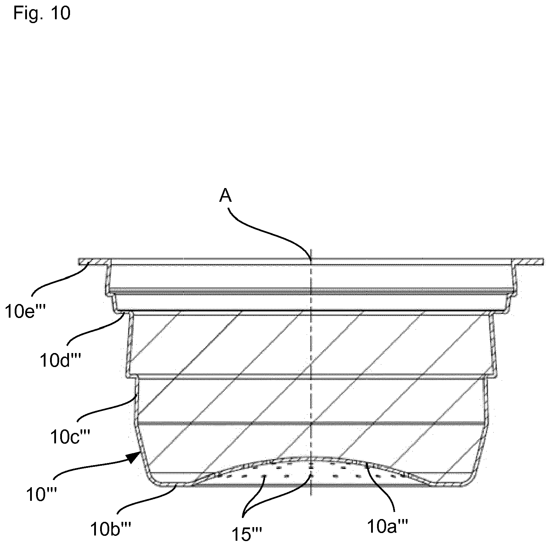

Fig. 10 zeigt eine vierte Ausführungsform eines Grundelements 10‴ der Erfindung, dessen Aufbau im Wesentlichen demjenigen der ersten Ausführungsform entspricht. Das Grundelement 10‴ umfasst einen Wölbungsabschnitt 10a‴, einen Anbringungsabschnitt 10b‴, einen Umfangsabschnitt 10c‴ sowie einen Flansch 10e‴. Im Bereich des Umfangsabschnitts 10c‴ ist ein Absatz 10d‴ vorgesehen, um im Inneren des Grundelements 10‴ eine Innenfolie (nicht dargestellt) aufzunehmen.

Das Grundelement 10‴ kann, wie in der ersten oder zweiten Ausführungsform, mit einem Deckel (Oberfolie), einer Innenfolie, einem Filter an einer Innenseite des Grundelements 10‴, einer Folie an einer Außenseite des Grundelements sowie einem Entnahmeteil versehen werden. Bezüglich dieser Elemente wird auf die Beschreibung der ersten und zweiten Ausführungsform verwiesen.

Das Grundelement 10‴ der vierten Ausführungsform unterscheidet sich vom Grundelement 10 der ersten Ausführungsform darin, dass anstelle einer mittig angeordneten Öffnung 15 im Wölbungsabschnitt gemäß der vierten Ausführungsform eine Vielzahl kleinerer Öffnungen 15‴ (sogenannte Mikroöffnungen) im Wölbungsabschnitt 10a‴ angeordnet sind, wobei die Öffnungen 15‴ relativ zu einer Achse A des Grundelements 10 in mehreren Kreisen angeordnet sind. Gemäß einer weiteren Variante ist es möglich, die Öffnungen 15‴ gemäß einer anderen Verteilung im Wölbungsabschnitt 10a‴ anzuordnen.

Die Mikroöffnungen haben beispielsweise eine Abmessung bzw. einen Durchmesser zwischen von 10µm und 100µm. Somit können die Mikroöffnungen als Filter dienen.

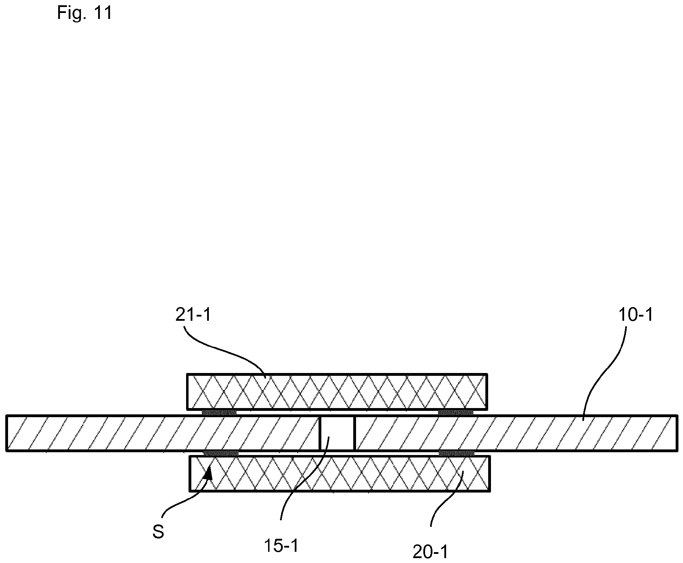

Anhand von Fig. 11 wird eine erste Modifikation der Erfindung beschrieben, wobei die dargestellte Modifikation einen Teilabschnitt eines Grundelements 10-1 zeigt. Das Grundelement 10-1 kann, wie in den zuvor beschriebenen Ausführungsformen, für eine Kapsel oder eine andere Verpackungseinheit eingesetzt werden.

Das Grundelement 10-1 ist mit einer Öffnung 15-1 versehen, die an einer äußeren Seite mit einer Folie 20-1 verschlossen ist, wobei die Folie 20-1 entlang eines sich um die Öffnung 15-1 erstreckenden Anbringungsabschnitt mit einem Anbringungsbereich S am Grundelement 10-1 angebracht ist.

Zusätzlich zur Folie 20-1 ist an einer Innenseite des Grundelements eine weitere Folie 21-1 vorgesehen, die ähnlich wie die Folie 20-1 an einem Anbringungsabschnitt, der sich um die Öffnung 15 erstreckt, am Grundelement 10-1 befestigt ist.

Das Grundelement 10-1 der Modifikation von Fig. 11 ist, im Querschnitt betrachtet, im Bereich der Öffnung 15-1 im Wesentlichen flach ausgebildet. Wird allerdings innerhalb des Grundelements 10-1 der Druck erhöht, so verformt sich das Grundelement 10-1, indem sich dieses nach außen wölbt (in Fig. 11 nach unten). Durch Ausbilden einer Wölbung wird eine mechanische Belastung im Bereich der Anbringungsabschnitte der Folien 20-1, 21-1 aufgebracht, die dazu führt, dass der Anbringungsbereich S der Folien 20-1, 21-1 zumindest teilweise zerstört wird, oder ein Teil der jeweiligen Folie 20-1, 21-1 auf Grund des Peelverhaltens der Folie 20-1, 21-1 delaminiert wird, was wiederum dazu führt, dass ein Durchfluss durch die Öffnung 15-1, und somit von einem Innenbereich des Grundelements 10-1, ermöglicht wird.

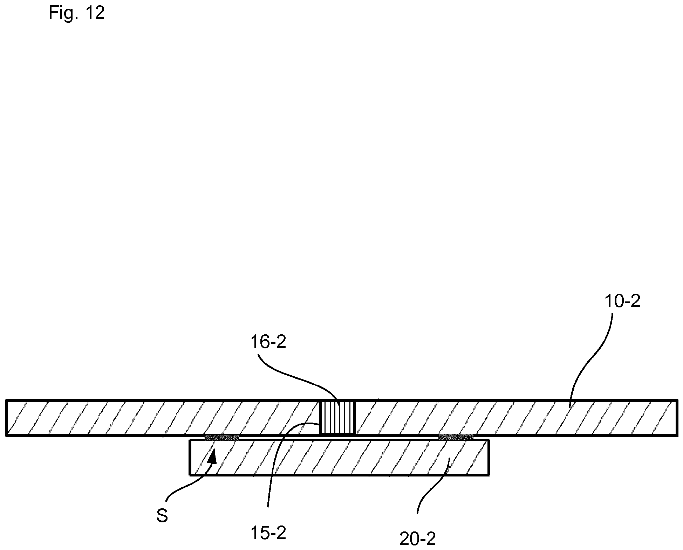

In Fig. 12 wird eine zweite Modifikation dargestellt, die ähnlich wie die erste Modifikation einen im Querschnitt flachen Bereich eines Grundelements 10-2 zeigt. Das Grundelement 10-2 kann, wie in den zuvor beschriebenen Ausführungsformen, für eine Kapsel oder eine andere Verpackungseinheit eingesetzt werden.

Im Grundelement 10-2 ist ein Öffnungsbereich 15-2 vorgesehen, wobei benachbart zum Öffnungsbereich 15-2 an der Außenseite des Grundelements eine Folie 20-2 angebracht ist. Der Anbringungsabschnitt der Folie 20-2 erstreckt sich um die Öffnung 15-2 herum.

Im Öffnungsbereich 15-2 im Grundelement 10-2 sind eine Vielzahl von Mikroöffnungen 16-2 vorgesehen, so dass größere Partikel aus der durch die Öffnung 15-2 strömenden Flüssigkeit herausgefiltert bzw. im Inneren des Grundelements 10-2 zurückgehalten werden.

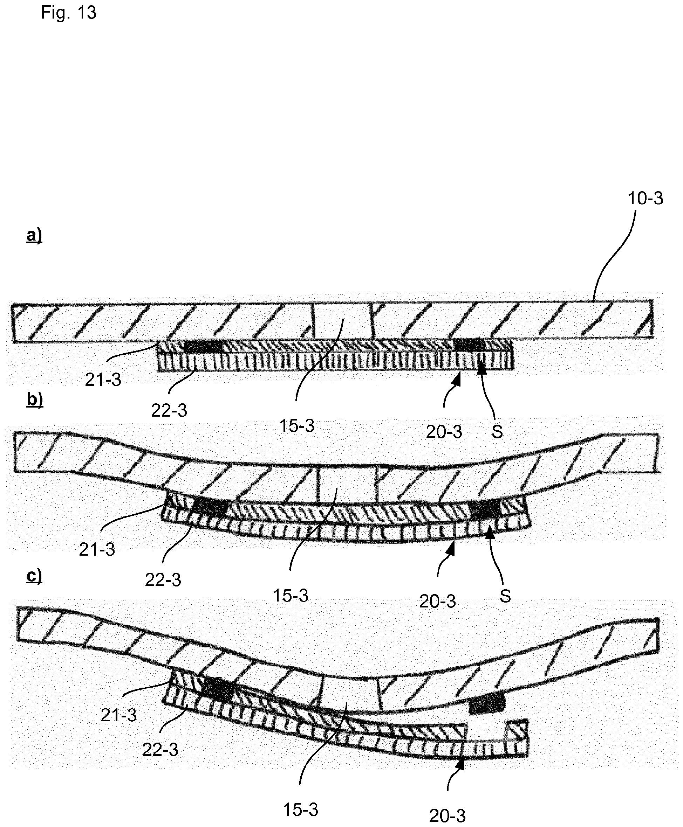

Die in Fig. 13 dargestellte dritte Modifikation zeigt ein Grundelement 10-3, dass im Querschnitt betrachtet im Wesentlichen flach ausgebildet ist und eine Öffnung 15-3 aufweist. Im Bereich der Öffnung 15-3 ist an der Außenseite des Grundelements 10-3 eine mehrschichtige Folie 20-3 angebracht, wobei die mehrschichtige Folie 20-3 neben der in Fig. 13 veranschaulichten ersten Schicht 21-3 und zweiten Schicht 22-3 einen Anbringungsbereich S aufweist, über den die mehrschichtige Folie 20-3 mit dem Grundelement 10-3 verbunden ist.

Anhand Fig. 13 wird ein Öffnungsvorgang der dritten Modifikation veranschaulicht. Insbesondere wird das im Ausgangszustand im Querschnitt im Wesentlichen flach ausgebildete Grundelement 10-3 durch Aufbringung eines Drucks an einer Innenseite des Grundelements 10-3 nach außen gewölbt, sodass entsprechend eine mechanische Belastung auf den Anbringungsbereich S der mehrschichtigen Folie 20-3 einwirkt. Bei Überschreiten eines Grenzwertes wird der Anbringungsbereich S abschnittsweise delaminiert, sodass ein Durchfluss von der Innenseite des Grundelements 10-3 durch die Öffnung und den geöffneten Abschnitt zur Außenseite des Grundelements 10-3 ermöglicht wird.

Das Grundelement 10-3 kann, wie in den zuvor beschriebenen Ausführungsformen, für eine Kapsel oder eine andere Verpackungseinheit eingesetzt werden.

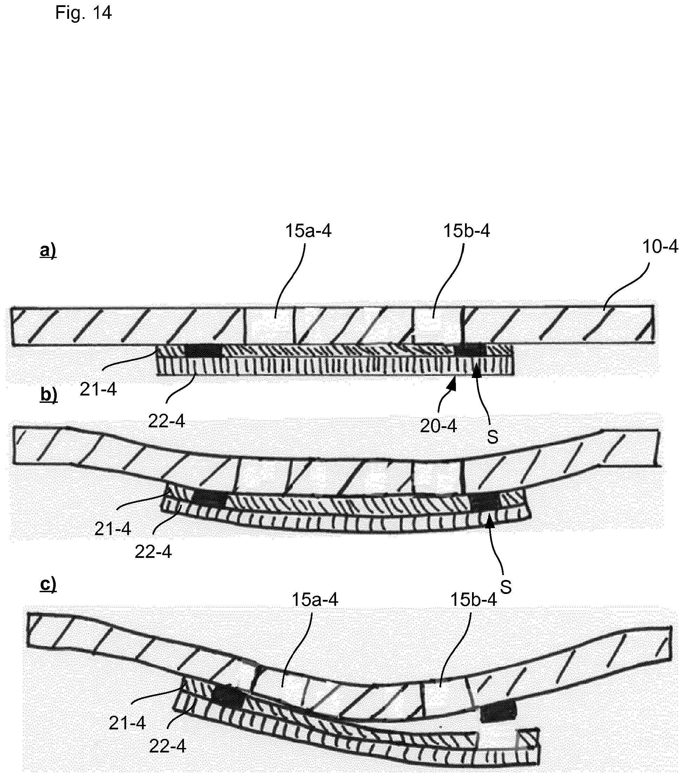

Fig. 14 zeigt eine vierte Modifikation, die sich im Wesentlichen dadurch von der dritten Modifikation unterscheidet, dass anstelle einer einzelnen Öffnung im Grundelement mehrere Öffnungen 15a-4, 15b-4 im Grundelement 10-4 vorgesehen sind.

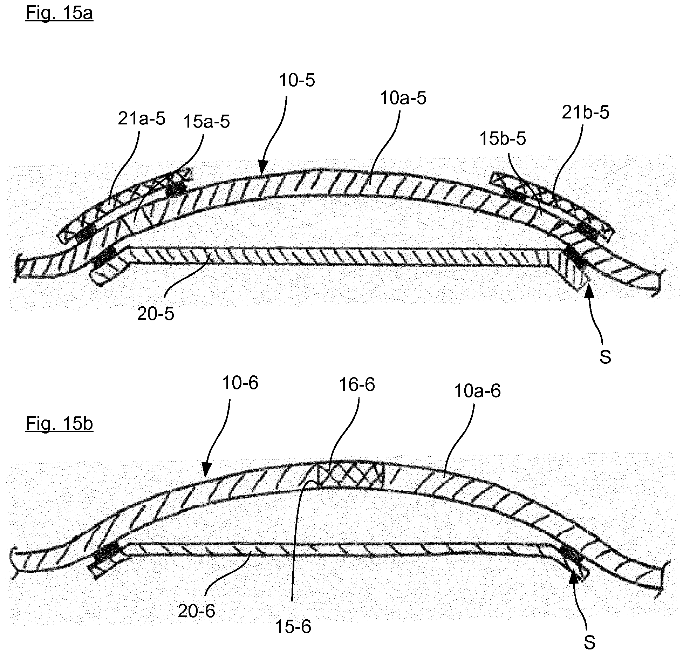

In Fig. 15 wird eine fünfte Modifikation veranschaulicht, die ein Grundelement 10-5 zeigt, das ähnlich wie das Grundelement 10 der ersten Ausführungsform einen Wölbungsabschnitt 10a-5 aufweist. An der Außenseite des Grundelements 10-5 ist im Bereich des Wölbungsabschnitts 10a-5 eine Folie 20-5 vorgesehen, die am Wölbungsabschnitt 10a-5 angebracht ist und den Wölbungsabschnitt 10a-5, im Querschnitt betrachtet, überspannt.

Im Bereich des Wölbungsabschnitts 10a-5 sind mehrere Öffnungen 15a-5, 15b-5 vorgesehen, die in der fünften Modifikation in einem Randbereich des Wölbungsabschnitts 10a-5 ausgebildet sind. Jede dieser Öffnungen 15a-5, 15b-5 ist gemäß der fünften Modifikation an der Innenseite des Grundelements 10-5 mit einer weiteren Folie 21a-5, 21b-5 verschlossen, die jeweils am Grundelement 10-5 befestigt ist.

Durch die fünfte Modifikation kann somit ein zweifacher Verschlussmechanismus vorgesehen werden, der es ermöglicht, dass eine gewisse Filterwirkung eintritt, im Zuge derer Partikel am Durchfluss durch die Öffnungen gehindert werden.

Die fünfte Modifikation gemäß Fig. 15a kann ebenso im Rahmen der ersten oder zweiten Ausführungsform zum Einsatz kommen, sodass bezüglich weiterer Erläuterungen auf die Beschreibung zur ersten und zweiten Ausführungsform verwiesen wird.

Fig. 15b zeigt eine sechste Modifikation, die sich von der fünften Modifikation darin unterscheidet, dass anstelle mehrerer Öffnungen ein, im Querschnitt betrachtet, mittig am Wölbungsabschnitt 10a-6 ausgebildeter Öffnungsbereich 15-6 vorgesehen ist, wobei der Öffnungsbereich 15-6 eine Vielzahl von Mikroöffnungen 16-6 aufweist. Der Öffnungsbereich 16-6 stellt sicher, dass Partikel mit bestimmter Dimension zurückgehalten werden. Somit übernehmen die Mikroöffnungen eine Filterfunktion.

Die sechste Modifikation gemäß Fig. 15b kann ebenso im Rahmen der ersten oder zweiten Ausführungsform zum Einsatz kommen, sodass bezüglich weiterer Erläuterungen auf die Beschreibung zur ersten und zweiten Ausführungsform verwiesen wird.

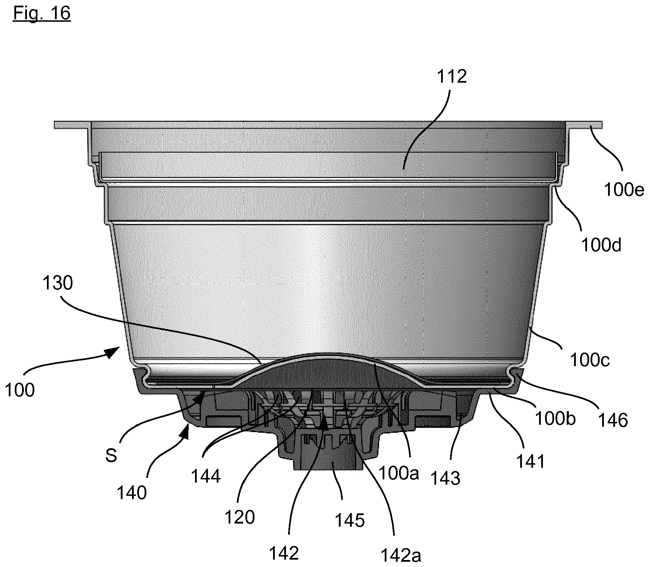

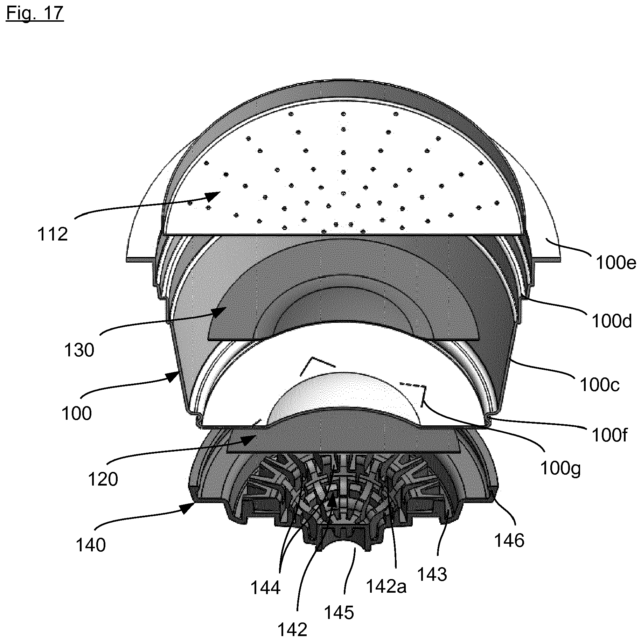

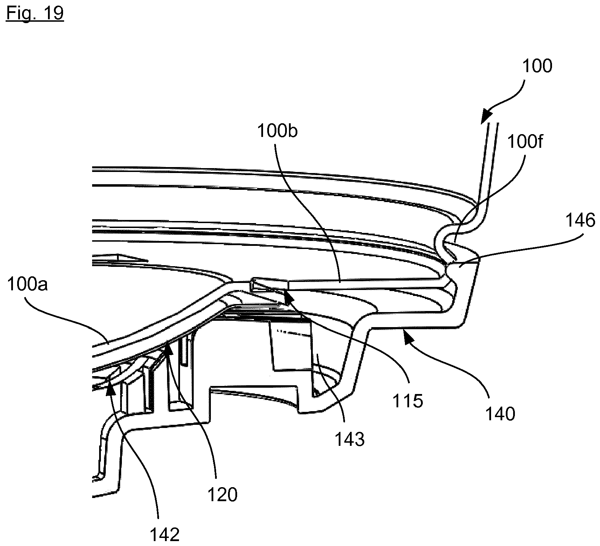

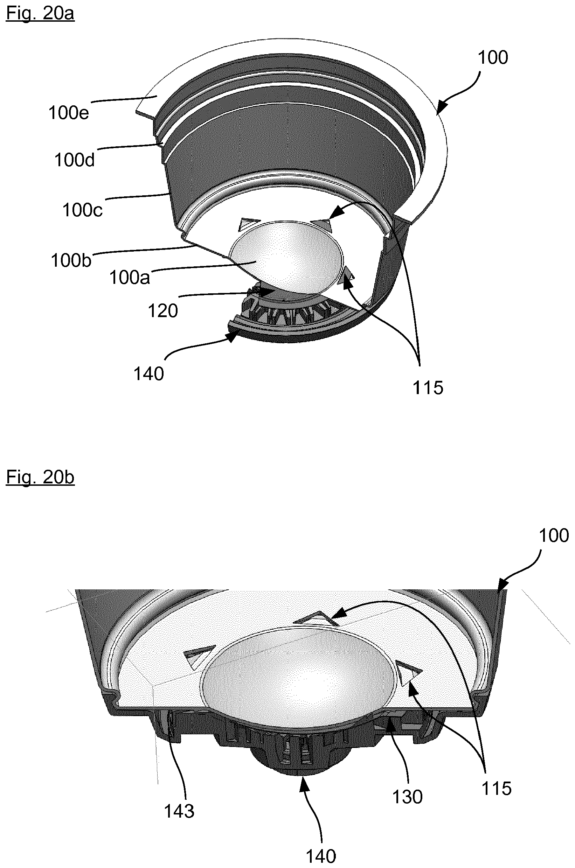

Anhand der Figuren 16-20b wird eine fünfte Ausführungsform beschrieben.

Die Kapsel gemäß der fünften Ausführungsform umfasst ein Grundelement 100, welches einen Kapselkörper zur Aufnahme eines Kaffee- oder Espressopulvers ausbildet. Das Grundelement 100 kann, wie in den zuvor beschriebenen Ausführungsformen und/oder Modifikationen, beispielsweise aus einem Kunststoffmaterial ausgebildet sein, insbesondere mittels Tiefziehens oder gemäß einer weiteren Variante mittels Spritzgießens.

Das Grundelement 10 umfasst einen Wölbungsabschnitt 100a ("Wölbung"), einen den Wölbungsabschnitt 100a umgebenden Anbringungsabschnitt 100b sowie einen die Seitenwand des Grundelements 100 ausbildenden Umfangsabschnitt 100c.

Im Bereich des Umfangsabschnitts 100c ist ein Absatz 100d ausgebildet, der im Inneren des Grundelements 100 eine Stufe bereitstellt. Am Absatz 100d des Grundelements 100 ist eine Innenfolie 112 eingebracht.

An einem zum Wölbungsabschnitt 100a entgegengesetzten Ende des Grundelements 100 ist ein Flansch 100e vorgesehen, der sich ausgehend vom Umfangsabschnitt 100c nach außen erstreckt. Der Flansch 100e dient der Aufnahme eines Deckels 111 (Oberfolie), der einen oberen Abschnitt des Grundelements 100 verschließt.

Innerhalb des Grundelements 100 ist ein Filter 130 eingelegt, der sich über den Wölbungsabschnitt 100a und in den Bereich des Anbringungsabschnitts 100b erstreckt. Dabei kann der Filter 130 mit einer Innenseite des Grundelements 100 fest verbunden sein. Das Verbinden des Filters 130 mit dem Grundelement 100 kann nach dem Ausbilden des Grundelements 100 und vor dessen Beschickung mit der Substanz (z.B. Espressopulver) erfolgen.

An der Außenseite des Grundelements 100 ist im Bereich des Anbringungsabschnitts 100b ein Entnahmeteil 140 ("Bodenteil") mittels einer Einrastverbindung angebracht.

Die Einrastverbindung wird durch einen an einem Verbindungsabschnitt 141 des Entnahmeteils 140 ausgebildeten Vorsprung 146 und ein am Grundelement 100 ausgebildete Umfangsnut 100f bereitgestellt. Bei der Fertigung wird das Entnahmeteil 140 derart relativ zum Grundelement 100 bewegt, dass der Vorsprung 146 in die Umfangsnut 100feinrastet und somit das Entnahmeteil 140 am Grundelement 100 fixiert.

Alternativ zur Einrastverbindung kann das Entnahmeteil auch mittels einer Schweißnaht im Bereich des Anbringungsabschnitts mit dem Grundelement verbunden sein.

Ein Umfangsraum 143 des Entnahmeteils 140 ist, ähnlich wie in der ersten Ausführungsform, durch eine Überstrombarriere in Form einer Trennwand 142a von einem Aufnahmeraum 142 des Entnahmeteils 140 getrennt, wobei Durchflussöffnungen 144 vorgesehen sind, die den Umfangsraum 143 und den Aufnahmeraum 142 miteinander verbinden.

Die Durchflussöffnungen 144 können, wie beispielsweise in der ersten Ausführungsform, eine Geometrie aufweisen, welche die Funktion eines Expansionsventils hat.

An einer bei Verwendung der Kapsel in vertikaler Richtung nach unten weisenden Seite des Entnahmeteils 140 ist ein Auslassbereich 145 vorgesehen, durch den die bei Verwendung in die Kapsel eingefüllte Flüssigkeit zum Äußeren gelangt. Der Auslassbereich 145 ist, im Querschnitt betrachtet, mittig (bzw. um eine Achse der Kapsel) angeordnet.

Zwischen dem Entnahmeteil 140 und dem Grundelement 100 ist eine Folie 120 vorgesehen, die am Anbringungsabschnitt 100b angebracht ist und den Wölbungsabschnitt 100a überspannt. Die Folie 120 erstreckt sich dabei, in der Querschnittsansicht betrachtet, im Wesentlichen in einer Ebene mit dem Anbringungsabschnitt 100b.

Die Folie 120 ist beispielsweise in einem im Wesentlichen kreisförmig ausgebildeten Anbringungsbereich S durch eine Siegelung am Grundelement angebracht.

Gemäß der fünften Ausführungsform ist die Folie 120 relativ fest ausgebildet. Der Anbringungsbereich S öffnet sich demnach, indem sich die Siegelung der Folie vom Grundelement ablöst und/oder die Siegelung aufbricht.

Gemäß der fünften Ausführungsform sind im Anbringungsabschnitts 100b des Grundelements 100 Stanzbereiche 100g (oder Stanzlinien) vorgesehen, die gemäß dem vorliegenden Ausführungsbeispiel durch Vorstanzen ausgebildet sind. Die Stanzbereiche 100g begrenzen eine Öffnung im Grundelement.

Benachbarte Stanzbereiche 100g treffen sich in einem Schnittpunkt. Somit bilden die benachbarten Stanzbereiche 100g eine dreiecksförmige oder pfeilförmige Gestalt aus, wobei der Schnittpunkt in radialer Richtung nach Außen weist. Bei Verwendung der Kapsel kann der zwischen den Stanzbereichen vorgesehene Bereich als Lasche nach Außen geklappt werden.

In einer Umfangsrichtung des Anbringungsabschnitts 100b des Grundelements 100 sind mehrere derartige Stanzbereiche 100g vorgesehen, die jeweils Öffnungen 115 ausbilden.

Die Folie 120 ist in radialer Richtung weiter außerhalb am Anbringungsabschnitt 100b angebracht, sodass durch den Anbringungsbereich der Folie 120 am Grundelement 100 eine Luftdichtheit sichergestellt wird, beispielsweise wenn die Stanzbereiche 100g durch Ausstanzen hergestellt wurden.

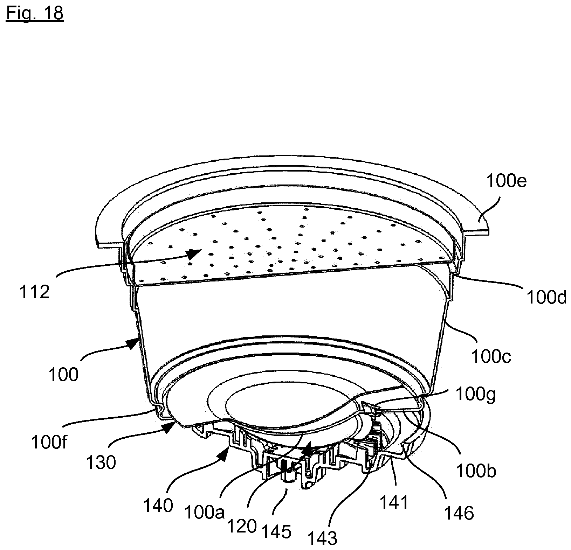

Nachfolgend wird ein Öffnungsvorgang beschrieben. Insbesondere wird bei Verwendung der Kapsel in einer Kaffee- oder Espressomaschine von der Seite des Deckels 111 eine Flüssigkeit in das Grundelement 100 eingebracht und der Druck innerhalb des Grundelements 100 auf diese Weise erhöht. Der erhöhte Druck führt dazu, dass sich der Wölbungsabschnitt 100a des Grundelements 100 von der in Fig. 16 dargestellten Ausrichtung nach außen verformt. Fig. 18 zeigt dabei den Zustand, in dem der Wölbungsabschnitt 100a bereits nach außen bewegt wurde.

Die Verformung des Wölbungsabschnitts 100a erfolgt, wie bei den vorangegangenen Ausführungsformen/Modifikationen, schlagartig, so dass der beschriebene Vorgang durch ein "Blopp-Geräusch" wahrgenommen wird. Anhand des Geräuschs kann nachvollzogen werden, dass ein bestimmtes Druckniveau (beispielsweise 5.5bar) innerhalb des Grundelements 100 erreicht wurde. Ferner wird gewährleistet, dass ein vorzeitiges Öffnen der Kapsel vermieden wird. Auch wird sichergestellt, dass ein definierter Aufguss des Kaffee- oder Espressopulvers stattfindet, bevor die Flüssigkeit aus der Kapsel austritt.

Die Verformung des Wölbungsabschnitts 100a des Grundelements 100 führt dazu, dass ein mittlerer Abschnitt der Folie 120 in das Entnahmeteil 140, insbesondere den Aufnahmeraum 142 des Entnahmeteils 140, gedrückt wird.

Hierdurch wird am Anbringungsbereich der Folie eine Kraft aufgebracht, die dazu führt, dass der Anbringungsbereich aufbricht und/oder sich der Anbringungsbereich (Siegelung) vom Grundelement 100 ablöst/abtrennt, und sich somit der Anbringungsbereich öffnet.

Durch das Ablösen der Folie 120 im Anbringungsbereich kann die Folie 120 weiter in das Entnahmeteil 140 bewegt werden, so dass sich die Folie 120 an eine im Entnahmeteil 140 vorgesehene rippenartige und/oder konkave Struktur anlegt.

Dabei ist der Aufnahmeraum 142 des Entnahmeteils 140 derart dimensioniert, dass der im Aufnahmeraum 142 aufgenommene Abschnitt der Folie 120 eine größere Fläche einnimmt als ein flacher, kreisförmiger Abschnitt der Folie 120, der nicht in den Aufnahmeraum gelangt. Insbesondere kann - im Querschnitt betrachtet - ein um beispielsweise mindestens 25% größerer Abschnitt der Folie in den Aufnahmeraum 142 gelangen, um ein Öffnen des Anbringungsbereichs zu bewirken.

Insbesondere klappen dreiecksförmige Laschen, die durch die Stanzlinien 100g begrenzt werden, in Richtung des Entnahmeteils 140. Durch die derart ausgebildeten Öffnungen strömt die in das Grundelement 100 eingeführte Flüssigkeit in das Entnahmeteil 140, insbesondere den Umfangsraum 143 des Entnahmeteils 140. Dabei ist es vorteilhaft, dass die Spitze der dreiecksförmigen Lasche in radialer Richtung nach Außen weist, da auf diese Weise die Flüssigkeit in den Umfangsraum 143 geleitet wird.

Vom Umfangsraum 143 gelangt die Flüssigkeit durch die Durchflussöffnungen 144 in den Aufnahmeraum 142 des Entnahmeteils 140 und von dort durch den Auslassbereich 145 zum Äußeren.

Da durch die Stanzbereiche eine Lasche ausgebildet wird, kann die Lasche, nachdem der Druck im Grundelement nachlässt, auf Grund der elastischen Kräfte des Materials des Grundelements 100 und/oder eines Unterdrucks wieder in ihre Ausgangsstellung zurückbewegt werden. Somit wird ein Nachtropfen in geeigneter Weise verhindert oder zumindest deutlich reduziert.

Obwohl die Erfindung im Rahmen der vorangegangenen Ausführungsformen und Modifikationen anhand einer Kapsel beschrieben wurde, die ein Kaffee- oder Espressopulver aufnehmen kann, kann die Erfindung auch bei anderen Verpackungseinheiten oder Ähnlichem zum Einsatz kommen.

## Patentansprüche

1. Kapsel zur Zubereitung eines Getränks, umfassend:
- eine Öffnungseinheit, umfassend mindestens ein Grundelement (10-10‴; 10-1 bis 10-6, 100) welches einen Kapselkörper zur Aufnahme einer Substanz zur Zubereitung eines Getränks ausbildet, mit mindestens einer Öffnung (15-15‴, 15-1 bis 15-6, 115);
- eine Oberfolie (11-11‴, 111), die die Öffnungseinheit verschließt; und
- eine an einer Seite eines Anbringungsabschnitts (10b) des Grundelements (10-10‴; 10-1 bis 10-6, 100) angebrachte Folie (20-20'; 20-1 bis 20-6, 120), welche die Öffnung verschließt,
wobei die Folie (20-20'; 20-1 bis 20-6, 120) mit einem in sich geschlossenen Anbringungsbereich (S) am Anbringungsabschnitt (10b) des Grundelements (10-10‴; 10-1 bis 10-6, 100) angebracht ist,
**dadurch gekennzeichnet, dass**
zumindest ein Teil des Bodens des Grundelements (10-10‴; 10-1 bis 10-6, 100) der Öffnungseinheit so ausgebildet ist, dass er eine Verformung erfahren kann, wobei der Boden unter Einfluss der Einführung einer Flüssigkeit und/oder eines Dampfes in die Kapsel derart verformbar ist, dass bei Verformung des Bodens des Grundelements (10-10‴; 10-1 bis 10-6, 100) die angebrachte Folie von der Kapsel weg gedrückt wird, so dass eine Schicht der Folie (20-20'; 20-1 bis 20-6, 120) abgelöst wird oder sich der Anbringungsbereich (S) öffnet.

2. Kapsel nach Anspruch 1, **dadurch gekennzeichnet, dass** der Boden des Grundelements in unbelastetem Zustand einen Wölbungsabschnitt (10a-10a‴, 10a-5 bis 10a-6), insbesondere im Bereich der mindestens einen Öffnung, aufweist, wobei bevorzugt ist, dass die Folie den Wölbungsabschnitt zumindest teilweise überspannt.

3. Kapsel nach Anspruch 2, **dadurch gekennzeichnet, dass** die zumindest eine Öffnung (15', 115) in dem Anbringungsabschnitt (10b`, 100b) zwischen dem Wölbungsabschnitt (1 0a', 100a) und einer Seitenwand (10c`, 100c) des Grundelements (10', 100) vorgesehen ist.

4. Kapsel nach Anspruch 2 oder 3, **dadurch gekennzeichnet, dass** der Wölbungsabschnitt in unbelastetem Zustand nach innen gewölbt ist, wobei der Wölbungsabschnitt unter dem Einfluss der Einführung einer Flüssigkeit und/oder eines Dampfes in die Kapsel nach außen gewölbt verformbar ist, so dass eine Schicht der Folie abgelöst wird und/oder sich der Anbringungsbereich (S) öffnet.

5. Kapsel nach einem der vorhergehenden Ansprüche, **dadurch gekennzeichnet, dass** das Grundelement (100) einen oder mehrere Stanzbereiche (100g) aufweist, mittels derer die Öffnung (115) im Grundelement (100) ausgebildet ist.

6. Kapsel nach Anspruch 5, **dadurch gekennzeichnet, dass** die Stanzbereiche (100g) sich schneidende Stanzlinien sind, wobei bevorzugt ist, dass durch die Stanzlinien eine in der Draufsicht dreiecksförmige Öffnung (115) ausgebildet ist.

7. Kapsel nach Anspruch 5 oder 6, **dadurch gekennzeichnet, dass** die Stanzbereiche (100g) so angeordnet sind, dass eine Lasche, die ein Abschnitt des Grundelements (100) ist, am Grundelement (100) gehalten wird.

8. Kapsel nach einem der vorhergehenden Ansprüche, **dadurch gekennzeichnet, dass** die Folie (20-3, 20-4) aus einem mehrschichtigen Material, insbesondere Kunststoffmaterial, ausgebildet ist.

9. Kapsel nach einem der vorhergehenden Ansprüche, **dadurch gekennzeichnet, dass** der Anbringungsbereich (S) durch eine Siegelung ausgebildet ist.

10. Kapsel nach einem der vorhergehenden Ansprüche, **dadurch gekennzeichnet, dass** an einer weiteren Seite des Grundelements (10-1, 10-5) eine weitere Folie (21-1, 21-5) angebracht ist, um die Öffnung (15-1, 15-5) zu verschließen.

11. Kapsel nach einem der vorhergehenden Ansprüche, ferner umfassend ein Entnahmeteil (40-40', 140), welches Entnahmeteil (40-40', 140) mindestens einen Aufnahmeraum (42-42', 142) aufweist, der mit zumindest einem Auslassbereich (45, 45', 145) für den Durchtritt einer Flüssigkeit in Verbindung steht.

12. Kapsel nach Anspruch 11 **dadurch gekennzeichnet, dass** der Entnahmeteil (40, 140) ein Mittel zur Auflage eines Abschnitts der Öffnungseinheit aufweist, wenn der Abschnitt der Öffnungseinheit einen bestimmten Verformungsgrad gegenüber seiner ursprünglichen Form erreicht hat.

13. Kapsel nach einem der Ansprüche 11 oder 12 **dadurch gekennzeichnet, dass** der Entnahmeteil (40-40', 140) einen Umfangsraum (43-43', 143) aufweist, wobei der Umfangsraum (43-43', 143) durch eine Trennwand (42a-42a', 142a) vom Aufnahmeraum (42-42', 142) getrennt ist, wobei Durchflussöffnungen (44-44', 144) in der Trennwand (42a-42a', 142a) vorgesehen sind.

14. Verfahren zur Verwendung einer Kapsel nach einem der vorhergehenden Ansprüche, wobei das Verfahren die Schritte umfasst:
- Einführen einer Flüssigkeit durch die Oberfolie (11-11‴, 111) in die Öffnungseinheit, wobei der Boden des Grundelements (10-10‴; 10-1 bis 10-6; 100) bei einem bestimmten Druck verformt wird, und wobei
bei Verformung den Boden des Grundelements (10-10‴; 10-1 bis 10-6; 100) die angebrachte Folie von der Kapsel weg gedrückt wird, so dass eine Schicht der Folie (20-20'; 20-1 bis 20-6; 120) abgelöst wird oder sich der Anbringungsbereich (S) öffnet.

## Claims

1. Capsule for preparing a beverage, comprising:
- an opening unit, comprising at least one basic element (10-10‴; 10-1 to 10-6, 100) which forms a capsule body for containing a substance for preparing a beverage, with at least one opening (15-15‴, 15-1 to 15-6-, 115);
- a top film (11-11‴, 111), which closes the opening unit; and
- a film (20-20'; 20-1 to 20-6, 120) which is attached to one side of an attachment portion (10b) of the basic element (10-10‴; 10-1 to 10-6, 100) and closes the opening,
wherein the film (20-20'; 20-1 to 20-6, 120) is attached to the attachment portion (10b) of the basic element (10-10‴; 10-1 to 10-6, 100) by a self-contained attachment region (S),
**characterized in that,**
at least a part of the base of the basic element (10-10‴; 10-1 to 10-6, 100) of the opening unit is designed in such a manner that it can undergo a deformation, wherein the base under the influence of the introduction of a liquid and/or of a steam into the capsule is deformable in such a manner that, when the base of the basic element (10-10‴; 10-1 to 10-6, 100) is deformed, the attached film is pushed away from the capsule in such a manner that a layer of the film (20-20'; 20-1 to 20-6, 120) is peeled away or the attachment region (S) opens up.

2. Capsule according to claim 1, **characterized in that** the base of the basic element in the unloaded state has a curvature portion (10a-10a‴, 10a-5 to 10a-6), in particular in the region of the at least one opening, with it being preferred that the film at least partially spans the curvature portion.

3. Capsule according to claim 2, **characterized in that** the at least one opening (15', 115) is provided in the attachment portion (10b', 100b) between the curvature portion (10a', 100a) and a side wall (10c', 100c) of the basic element (10', 100).

4. Capsule according to claim 2 or 3, **characterized in that** the curvature portion in the unloaded state is arched inwards, in which the curvature portion under the influence of the introduction of a liquid and/or a steam in the capsule is deformable arched outwards such that a layer of the film is peeled away and/or the attachment region (S) opens up.

5. Capsule according to one of the preceding claims, **characterized in that** the basic element (100) has one or more punching regions (100g) by means of which the opening (115) in the basic element (100) is formed.

6. Capsule according to claim 5, **characterized in that** the punching regions (100g) are intersecting punching lines, with it being preferred for the punching lines to form an opening (15) which is triangular in top view.

7. Capsule according to claim 5 or 6, **characterized in that** the punching regions (100g) are arranged in such a manner that a tab which is a portion of the basic element (100) is held on the basic element (100).

8. Capsule according to one of the preceding claims, **characterized in that** the film (20-3, 20-4) is formed from a multilayered material, in particular plastics material.

9. Capsule according to one of the preceding claims, **characterized in that** the attachment region (S) is formed by a seal.

10. Capsule according to one of the preceding claims, **characterized in that** a further film (21-1, 21-5) is attached to a further side of the basic element (10-1, 10-5) in order to close the opening (15-1, 15-5).

11. Capsule according to one of the preceding claims, furthermore comprising a removal part (40-40', 140), which removal part (40-40', 140) has at least one receiving space (42-42', 142) which is connected to at least one outlet region (45, 45', 145) for the passage of a liquid.

12. Capsule according to one of the preceding claims, **characterized in that** the removal part (40, 140) has a means for supporting a portion of the opening unit when the portion of the opening unit has reached a certain degree of deformation in relation to its original shape.

13. Capsule according to one of the preceding claims, **characterized in that** the removal part (40-40', 140) has a circumferential space (43-43', 143), wherein the circumferential space (43-43', 143) is separated from the receiving space (42-42', 142) by a partition (42a-42a', 142a), wherein throughflow openings (44-44', 144) are provided in the partition (42a-42a', 142a).

14. Method for using a capsule according to one of the preceding claims, wherein the method comprises the steps of:
- introducing a liquid through the top film (11-11‴, 111) into the opening unit, wherein the base of the basic element (10-10‴; 10-1 to 10-6; 100) is deformed at a certain pressure, and wherein,
when the base of the basic element (10-10‴; 10-1 to 10-6; 100) is deformed, the attached film is pushed away from the capsule such that a layer of the film (20-20'; 20-1 to 20-6; 120) is peeled away or the attachment region (S) opens up.

## Revendications

1. Capsule pour la préparation d'une boisson, comprenant :
- une unité d'ouverture comprenant au moins un élément de base (10-10‴ ; 10-1 à 10-6, 100) qui forme un corps de capsule pour recevoir une substance pour la préparation d'une boisson, avec au moins une ouverture (15-15‴, 15-1 à 15-6, 115) ;
- un opercule supérieur (11-11‴, 111) qui ferme l'unité d'ouverture ; et
- un opercule (20-20' ; 20-1 à 20-6, 120) fixé à un côté d'une partie de fixation (10b) de l'élément de base (10-10‴ ; 10-1 à 10-6, 100) et fermant l'ouverture,
l'opercule (20-20' ; 20-1 à 20-6, 120) étant fixé à la partie de fixation (10b) de l'élément de base (10-10‴ ; 10-1 à 10-6, 100) avec une zone d'application (S) fermée sur elle-même,
**caractérisé en ce que**
au moins une partie du fond de l'élément de base (10-10‴ ; 10-1 à 10-6, 100) de l'unité d'ouverture est formée de manière à pouvoir subir une déformation, le fond étant déformable sous l'effet de l'introduction d'un liquide et/ou d'une vapeur dans la capsule de telle sorte que, lors de la déformation du fond de l'élément de base (10-10‴ ; 10-1 à 10-6, 100), l'opercule appliqué est repoussé de la capsule, de sorte qu'une couche de l'opercule (20-20' ; 20-1 à 20-6, 120) soit détachée ou que la zone d'application (S) s'ouvre.

2. Capsule selon la revendication 1, **caractérisée en ce que** le fond de l'élément de base présente, à l'état de non-sollicitation, une partie bombée (10a-10a‴, 10a-5 à 10a-6), en particulier dans la zone de l'au moins une ouverture, l'opercule recouvrant de préférence au moins partiellement la partie bombée.

3. Capsule selon la revendication 2, **caractérisée en ce que** ladite au moins une ouverture (15', 115) est prévue dans la partie de fixation (10b', 100b) entre la partie bombée (10a', 100a) et une paroi latérale (10c', 100c) de l'élément de base (10', 100).

4. Capsule selon la revendication 2 ou 3, **caractérisée en ce que** la partie bombée est bombée vers l'intérieur à l'état de non-sollicitation, la partie bombée étant déformable vers l'extérieur sous l'effet de l'introduction d'un liquide et/ou d'une vapeur dans la capsule, de sorte qu'une couche de l'opercule est détachée et/ou que la zone d'application (S) s'ouvre.

5. Capsule selon l'une des revendications précédentes, **caractérisée en ce que** l'élément de base (100) présente une ou plusieurs zones de découpe (100g) au moyen desquelles l'ouverture (115) est formée dans l'élément de base (100).

6. Capsule selon la revendication 5, **caractérisée en ce que** les zones de découpe (100g) sont des lignes de découpe sécantes, la préférence étant que les lignes de découpe forment une ouverture (115) de forme triangulaire en vue de dessus.

7. Capsule selon la revendication 5 ou 6, **caractérisée en ce que** les zones de découpe (100g) sont agencées de manière qu'une languette, qui est une partie de l'élément de base (100), soit maintenue sur l'élément de base (100).

8. Capsule selon l'une des revendications précédentes, **caractérisée en ce que** l'opercule (20-3, 20-4) est formé d'un matériau multicouche, notamment d'un matériau plastique.

9. Capsule selon l'une des revendications précédentes, **caractérisée en ce que** la zone de fixation (S) est formée par un scellement.

10. Capsule selon l'une quelconque des revendications précédentes, **caractérisée en ce qu**'un autre opercule (21-1, 21-5) est appliqué sur un autre côté de l'élément de base (10-1, 10-5) pour fermer l'ouverture (15-1, 15-5).

11. Capsule selon l'une quelconque des revendications précédentes, comprenant en outre une partie de prélèvement (40-40', 140), laquelle partie de prélèvement (40-40', 140) comporte au moins un espace de réception (42-42', 142) étant reliée à au moins une zone de sortie (45, 45', 145) pour le passage d'un liquide.

12. Capsule selon la revendication 11, **caractérisée en ce que** la partie de prélèvement (40, 140) comporte un moyen d'appui d'une partie de l'ensemble d'ouverture lorsque la portion de l'ensemble d'ouverture a atteint un certain degré de déformation par rapport à sa forme d'origine.

13. Capsule selon l'une des revendications 11 ou 12 **caractérisée en ce que** la partie de prélèvement (40-40', 140) comprend un espace périphérique (43-43', 143), l'espace périphérique (43-43', 143) étant séparé de l'espace de réception (42-42', 142) par une cloison (42a-42a', 142a), des orifices de passage (44-44', 144) étant prévus dans la cloison (42a, 42a', 142a).

14. Procédé d'utilisation d'une capsule selon l'une des revendications précédentes, ledit procédé comprenant les étapes consistant à :
- introduire un liquide à travers l'opercule supérieur (11-11‴, 111) dans l'unité d'ouverture, le fond de l'élément de base (10-10‴ ; 10-1 à 10-6 ; 100) étant déformé à une pression déterminée, et
lors de la déformation du fond de l'élément de base (10-10‴ ; 10-1 à 10-6 ; 100), l'opercule appliqué est repoussé de la capsule, de sorte qu'une couche de l'opercule (20-20' ; 20-1 à 20-6 ; 120) est détachée ou que la zone d'application (S) s'ouvre.
